Europäisches Patentamt

European Patent Office

Office européen des brevets

(19)

(11) Publication number:  **0 194 822**
**A2**

(12) # EUROPEAN PATENT APPLICATION

(21) Application number: **86301648.1**

(22) Date of filing: **07.03.86**

(51) Int. Cl.⁴: **G 06 F 9/44**

(30) Priority: 11.03.85 JP 47811/85
11.03.85 JP 47812/85
11.03.85 JP 47810/85
11.03.85 JP 47809/85
11.03.85 JP 47813/85

(43) Date of publication of application:
17.09.86 Bulletin 86/38

(84) Designated Contracting States:
AT DE FR GB NL

(71) Applicant: SONY CORPORATION
7-35 Kitashinagawa 6-Chome Shinagawa-ku
Tokyo 141(JP)

(72) Inventor: Maruyama, Sadanobu
Patents Division, Sony Corp. 6-7-35 Kitashinagawa
Shinagawa-ku Tokyo 141(JP)

(72) Inventor: Suzuki, Naoya
Patents Division, Sony Corp. 6-7-35 Kitashinagawa
Shinagawa-ku Tokyo 141(JP)

(74) Representative: Thomas, Christopher Hugo et al,
D Young & Co 10 Staple Inn
London WC1V 7RD(GB)

(54) Methods of and apparatus for compiling high-level language statements into low-level language instruction sets.

(57) Apparatus for compiling high-level computer language statements into a low-level computer language instruction sets, comprises means for detecting completion of the inputting by a keyboard (2) of each line of a high-level language source program, and for storing the line in a predetermined memory area (4f), means (4a) for compiling each of the input lines of source program upon completion of the inputting of the line to generate low-level language instructions, and means for storing the compiled low-level language instructions in another predetermined memory area (4d). The machine language object program may be linked with a runtime routine library so as to enable execution of the object program when the object program is outputted in response to a command input through the keyboard (2).

*FIG.2*

4

| INTERACTIVE COMPILER (4a) |
| RUNTIME ROUTINE (4b) |
| STACK AREA (4c) |
| OBJECT PROGRAM (4d) |
| WORK AREA (4e) |
| BASIC SOURCE PROGRAM (4f) |

1.

## METHODS OF AND APPARATUS FOR COMPILING HIGH-LEVEL LANGUAGE STATEMENTS INTO LOW-LEVEL LANGUAGE INSTRUCTION SETS

This invention relates to methods of and apparatus for compiling high-level language statements into low-level language instruction sets, and more particularly to methods of compiling a source program written in a high-level language into an object program written in machine language.

There are two commonly known ways to convert high-level language to low-level language; namely interpreters and compilers.

As is well known, interpreters translate, line by line, a high-level language, such as a source program written in BASIC, into machine language during execution of the program. When an error occurs in the source program, program execution is terminated and the line number at which the error occurs and a code or message identifying the kind of error will be displayed. Therefore, error correction can easily be done by correcting the erroneous portions of the program. In recently refined implementations of BASIC, it is possible to display the line of the program being executed during execution of the source program. This makes it much easier to locate and analyze errors.

In the case of interpreters, since each line of the source program is translated separately, the execution time of the source program is relatively long. In addition, in order to execute a program, it is always necessary to have both the source program and the interpreter in memory. This requires a relatively large memory.

Compilers are arranged to compile an entire program at one time. During execution of the program, only the object program written in machine language is executed. For example, a source program is written in a high-level language by means of a text editor, and is then compiled into a relocatable object program written in the machine language by the compiler. The compiled object program is finally linked to a library of run time routines by means of a linker to form an executable object program. This object program can be executed alone without the source program or the compiler. It can also be stored on disc or in a read-only memory (ROM) for execution at any desired time.

2                    0194822

In summary, object programs generated by compilers can lower memory requirements while facilitating execution at a relatively high speed.

However, on the other hand, since the compiler compiles the source program into an object program at one time, it has been impossible to execute part of the source program for the sake of confirmation and detection of errors in the source program. This makes it difficult to find syntax errors or defects in the source program. In practice, the source program cannot be checked except by trying to compile it into an object program. Furthermore, even if only partial debugging of the source program is necessary, the entire source program must again be compiled. This makes debugging the source program troublesome.

In addition, since the compiled object program cannot be compared with corresponding portions of the source program, it is difficult to check coding and compilation efficiency with respect to memory size.

According to the present invention there is provided apparatus for compiling high-level language statements into low-level language instructions for a computer which comprises a high-level language input means, a memory and a central processing unit, the apparatus being characterised by:

means for detecting completion of the input of each line of a high-level language source program;

means for storing said input lines of source program in a first predetermined area of the memory;

means for compiling each of said input lines of source program, line by line, upon completion of the inputting of each line, to generate low-level language instructions; and

means for storing the compiled low-level language instructions in a second predetermined area of the memory.

According to the present invention there is also provided apparatus for compiling high-level language statements into low-level language instructions for a computer which comprises a keyboard for inputting high-level language source program statements comprising fundamental instruction components and additional instruction components, memory means, including an external memory for storing modules of additional instructions, and a central processing unit, the apparatus being characterised by:

means for detecting completion of the inputting of each line of the high-level language source program through the keyboard, means for selecting and transferring additional instruction components from the additional instruction modules, stored in the external memory, to form high-level language statements to be used in conjunction with the fundamental instruction components;

means for storing the input lines of the source program in a first predetermined area of the memory means;

means for compiling each of the lines of the source program upon completion of inputting of each line to generate low-level language instructions; and

means for storing the compiled low-level language instructions in a second predetermined area of the memory means.

According to the present invention there is also provided a method of compiling high-level language statements inputted into a computer into low-level language instructions for the computer, the method being characterised by:

detecting the completion of the inputting of each line of a high-level language source program;

storing each input line of source program;

compiling each input line of source program, line by line, upon completion of the inputting of the line to generate low-level language instructions; and

storing the compiled low-level language instructions.

According to the present invention there is also provided a method of compiling high-level computer language statements into low-level computer language instructions, the method comprising the step of:

entering into a computer high-level language program statements comprising fundamental instruction components and designations of additional instruction components;

characterised by the further steps of:

detecting the completion of the inputting of each line of the high-level language program statements and then accessing an external memory to retrieve the designated additional instruction components stored therein for execution in conjunction with the fundamental instruction components;

storing the combined fundamental instruction components and additional instruction components;

compiling the combined fundamental instruction components and additional instruction components as each input line is completed to generate low-level language instructions; and

storing the compiled low-level language instructions.

Embodiments of the invention may thus provide a compiling method which compiles the high-level language source program into the low-level language object program line-by-line, and/or a method of compiling a high-level language source program into a low-level language object program which enables variables. line numbers and the text of a BASIC source program to be checked during compilation, and/or a method of compiling a high-level program into a low-level language which allows the variables used in another high-level language source program to be linked to the program being compiled.

The method may further include a step of linking the machine language object program with a runtime routine library so as to enable execution of the object program when the object program is outputted in response to a command input through the keyboard.

Preferably, the high-level language statements are made up of a basic instruction portion and an additional instruction portion. The high-level language stored in memory includes the basic instruction portion and additional instruction modules selected from among a plurality of additional instructions.

The invention will now be described with the reference to the accompanying drawings, in which like parts are referred to by like references, and in which:

Figure 1 is a schematic block diagram of a preferred embodiment of compiler according to the present invention, which implements the preferred method of compiling a high-level language statement into low-level language instructions, according to the present invention;

Figure 2 is a memory map of the compiler system of Figure 1, which is divided into a plurality of memory areas;

Figure 3 is an illustration of a display showing a typical source routine on a CRT display in the compiler system of Figure 1;

Figure 4 is an illustration of a display showing a variable list for the source program shown in Figure 3; and

Figures 5 and 6 are diagrammatic memory maps of the source program area in memory.

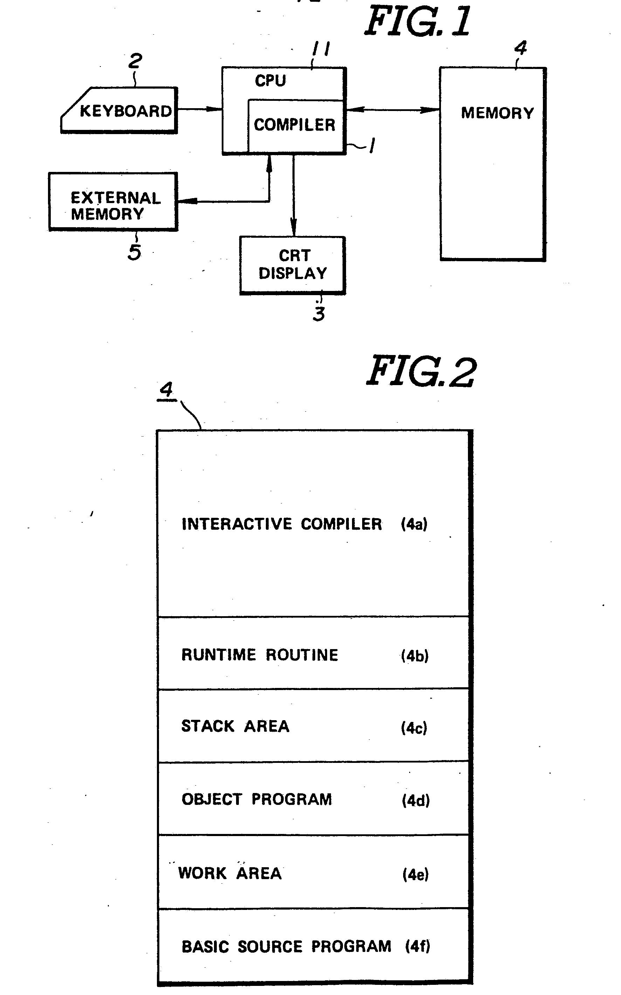

Referring now to the drawings, Figure 1 schematically shows a personal computer forming the preferred embodiment of a compiler apparatus according to the invention, which compiler apparatus implements the preferred method of compiling the high-level language statements into low-level language instructions. In practical operation, a source program written in a high-level language, such as BASIC, is typically inputted through a keyboard 2. The input source program is displayed on a CRT display 3 in the form of text. A compiler 1, residing in a programmed central processing unit (CPU) 11, compiles the input source program into an object program written in a low-level language, such as machine language. The compiler 1 is normally programmed and stored in an external memory medium, such as a magnetic disc 5 and read out and stored in a memory 4 upon use by the CPU 11.

As shown in Figure 2, the memory 4 is divided into a plurality of memory areas for storing different kinds of data. In the embodiment, the memory 4 is divided into an interactive compiler area 4a, a runtime routine area 4b, a stack area 4c, an object program area 4d, a work area 4e, and a BASIC source program area 4f.

Fundamental Operation

At first, the source program inputted through the keyboard 2 is stored in the BASIC source program area 4f line by line. In practice, each keystroke input of the BASIC source program is displayed on the CRT display 3. The display of the input source program includes a line number label for the input line of the source program. In response to depression of the RETURN key of the keyboard 2, the newly inputted line of the source program is saved in the BASIC source program area 4f of the memory 4. At the same time, a new line number for the source program is displayed on the CRT display 3. This source program input operation follows the well-known procedures.

It should be appreciated that, in this disclosure, BASIC is used as the high-level language in which the source program is written, but the compiling method is applicable not only to source programs written in BASIC, but also to any other high-level languages, such as PASCAL, FORTRAN and the like. Also, as is well known, it is possible to execute the source program per se. If necessary, the personal computer will work as an interpreter-type computer by coupling an interpreter thereto. The work area 4e is used to save the variables when the computer serves as an interpreter-type computer.

The input line of the source program is immediately fed to the compiler area 4a and compiled and stored in the object program area 4d as part of the object program. At this time, the variables and unidentified line numbers discovered during compilation operation are saved in the stack area 4c. Therefore, the lines of the source program are compiled one-by-one into the object program upon being inputted through the keyboard 2.

The object program can be executed at any time, even if compilation or source coding are not completed. In this case, the part of the object program which corresponds to the part of the source program inputted so far is linked with the runtime routines in the runtime routine area 4b and is executed for the purpose of debugging. As long as the program is not complete or contains bugs, error messages will appear on the CRT display 3 during execution.

Operation in response to the command "GENERATE"

As is well known, in BASIC, the command "SAVE" is used to store the source program in the external memory 5, such as on a magnetic disc. In the embodiment, the command "SAVE" has the same function. However, the compiled object program can also be stored in the external memory 5 by means of the command "GENERATE". Storing the object program makes subsequent execution of the program easier and faster.

When the object program is to be stored in the external memory 5 in response to the command "GENERATE", it can be selectively stored linked with the runtime routines or as a body separate from the runtime routines. When an object program linked with the runtime routines is stored in the external memory 5, immediate execution of the stored program is possible. On the other hand, when the object program is stored as a separate unit, a single runtime routine library can be used in common in cases where the external memory 5 stores a plurality of object programs.

Operation in response to the command "XREF"

The variables identified in the source program are stored in the memory work area 4e. In the embodiment, the data in the work area 4e concerning the variables can be displayed to show the types of the variables and the line numbers in the program in which the corresponding variables are used.

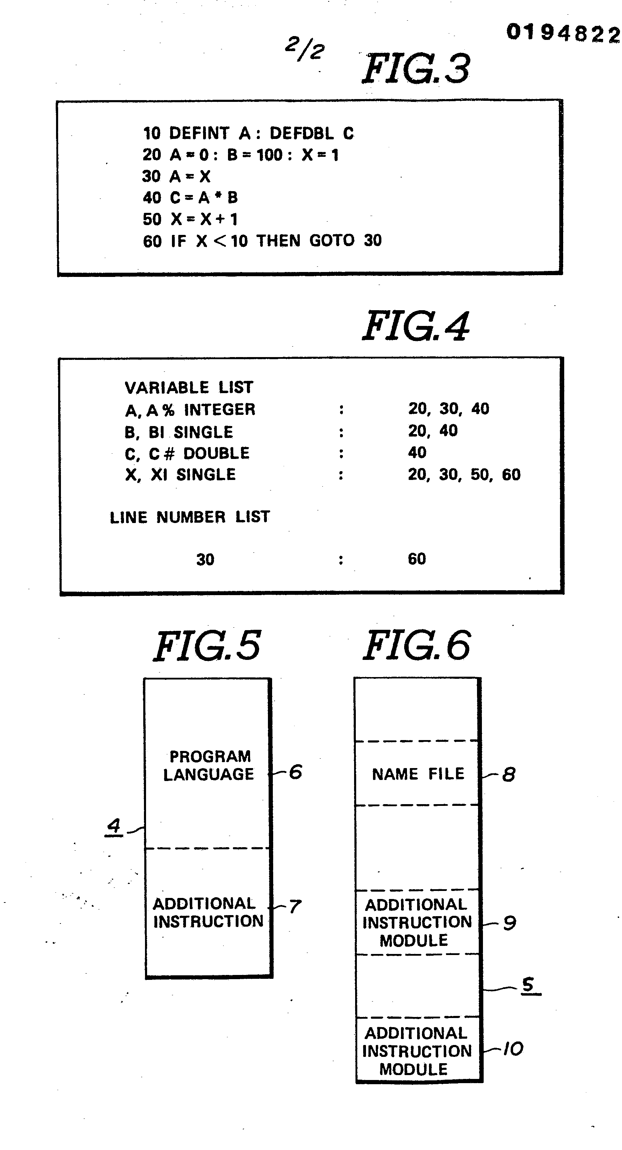

Often when a program grows relatively long, confusion among variables can occur. Specifically, variable names tend to be duplicated unintentionally and a variable name can be inputted incorrectly due to typographical errors, resulting in meaningless variables. In order to avoid this, a management table for the variables in the memory work area 4e is provided in the embodiment. The embodiment allows display of the condition of the variables by means of the command "XREF". For example, assuming the source program as shown in Figure 3, the CRT display 3 can be switched to show the list of variables shown in Figure 4 in response to input of the command "XREF".

Operation in response to the commands "VARSAVE" and "VARLOAD"

As set forth above, the variables identified in the source program are stored in the work area 4e. The embodiment allows inputting and outputting of the variables alone stored in the work area 4e, from or to the external memory 5. This function would be convenient in cases where a plurality of mutually related programs use common names for variables. Also, this function would be convenient when it is necessary to convert or swap variables between programs.

The commands "VARSAVE" and "VARLOAD" are used to input and output variables between the external memory 5 independently of programs. Specifically, the command "VARSAVE" causes variables to be outputted to the external memory 5, and the command "VARLOAD" causes variables to be inputted from the external memory 5.

Expansion of program language

The aforementioned commands "GENERATE", "XREF", "VARSAVE" and "VARLOAD" are not included in normal BASIC, but rather are new commands recognizable by the present compiler. Some computers can use any of various high-level languages for the source program depending upon the associated external memory 5. This type of computer tends to have problems involving program execution even when the program is written in BASIC. Specifically, in some cases, high-level compatibility is lost when new models and upgrades are released.

The general opinion is that the more commands a computer has, the higher is its "level". As a result, commands which are used relatively infrequently tend to be added to each new model of the computer to help

8

0194822

distinguish it from competing computers. This tends to lead to unnecessarily large memory consumption. Since the BASIC source program area 4f is allocated for storage of BASIC language and the source program or source programs, if the memory area to be used as the BASIC source program area is limited, the memory area available for storing the source program deceases as the complexity of the BASIC language implementation itself increases.

In order to avoid this problem, in the preferred embodiment of the compiler system, the high-level language is made up of a fundamental instruction part 6 and an additional instruction part 7 as shown in Figure 5. The source program written in accordance with the preferred method includes identification of one or more additional instruction parts. The additional instructions identified in the source program are loaded into memory separately for use in conjunction with the fundamental instruction part.

In practice, as shown in Figure 6, a name file 8 is provided on the disc or other external memory 5. The name file 8 holds file names for the code needed to execute each of the additional instructions. According to the data in the name file 8, additional instruction modules 9 and 10 for the instructions identified in the source program are added to the fundamental instruction part. Preferably, this process may ensue internally in the compiler 1 during inputting of the source program so as not to require the attention of the programmer. In this case, the area occupied by the BASIC source program is minimized while allowing use of additional instructions. Therefore, sufficient area for the source program can be provided. As will be appreciated, when no additional instructions are used and thus the program is made up only of the fundamental instructions, the memory area available for the source program is maximized.

## CLAIMS

1. Apparatus for compiling high-level language statements into low-level language instructions for a computer which comprises a high-level language input means (2), a memory (4) and a central processing unit (11), the apparatus being characterised by:

means for detecting completion of the input of each line of a high-level language source program;

means for storing said input lines of source program in a first predetermined area (4f) of the memory (4);

means (4a) for compiling each of said input lines of source program, line by line, upon completion of the inputting of each line, to generate low-level language instructions; and

means for storing the compiled low-level language instructions in a second predetermined area (4d) of the memory (4).

2. Apparatus according to claim 1 further comprising a display (3), and means for managing variables used in said source program, said variable managing means including a third predetermined area (4e) of the memory (4) for storing said variables, and means responsive to a command entered through the high-level language input means (2) for accessing said stored variables and causing the display (3) to display at least the line numbers of the source program in which the accessed variables are used.

3. Apparatus according to claim 1 further comprising means for outputting variables used in said source program, said variable outputting means storing said variables in a third predetermined area (4e) of the memory (4) and outputting said variables and information concerning said variables to an external memory (5) in response to input of a command through the high-level language input means (2).

4. Apparatus according to claim 3 further comprising means for accessing said external memory (5) for reading out variables and information concerning said variables stored therein for use in a source program upon inputting of a corresponding command through the high-level language input means (2).

0194822

5. Apparatus according to claim 1 further comprising means for selectively outputting either the high-level language source program or the low-level language program to an external memory (5) in response to input of one of two corresponding commands through the high-level language input means (2).

6. Apparatus according to claim 5 wherein said means for outputting to the external memory (5) is capable of outputting the low-level language instructions even during compilation, and further, the low-level language instructions are arranged to link with a runtime routine so as to form an object program capable of execution.

7. Apparatus according to claim 5 wherein said means for selectively outputting either the high-level language source program or the low-level language program can also selectively output the low-level language program in the form of an object program linked with a runtime routine and in the form of compiled low-level language instructions per se.

8. Apparatus for compiling high-level language statements into low-level language instructions for a computer which comprises a keyboard (2) for inputting high-level language source program statements comprising fundamental instruction components (6) and additional instruction components (7), memory means (4, 5), including an external memory (5) for storing modules (9, 10) of additional instructions, and a central processing unit (CPU), the apparatus being characterised by:

means for detecting completion of the inputting of each line of the high-level language source program through the keyboard (2), means for selecting and transferring additional instruction components from the additional instruction modules (9, 10), stored in the external memory (5), to form high-level language statements to be used in conjunction with the fundamental instruction components (6);

means for storing the input lines of the source program in a first predetermined area (4f) of the memory means (4, 5);

means (4a) for compiling each of the lines of the source program upon completion of inputting of each line to generate low-level language instructions; and

means for storing the compiled low-level language instructions in a second predetermined area (4d) of the memory means (4, 5).

9.   A method of compiling high-level language statements inputted into a computer into low-level language instructions for the computer, the method being characterised by:

detecting the completion of the inputting of each line of a high-level language source program;

storing each input line of source program;

compiling each input line of source program, line by line, upon completion of the inputting of the line to generate low-level language instructions; and storing the compiled low-level language instructions.

10.   A method according to claim 9 comprising the further steps of storing the program variables as a group and, in response to an entered command, accessing the stored variables and displaying at least the line numbers of the source program in which the accessed variables are used.

11.   A method according to claim 9 further comprising the steps of storing the program variables and outputting them, and information concerning them, to an external memory (5) in response to a command.

12.   A method according to claim 11 further comprising the steps of accessing the external memory (5) in response to a command and reading out the variables and information concerning them for use in the source program.

13.   A method according to claim 9 further comprising the steps of selectively outputting either the high-level language source program or the low-level language program to an external memory (5) in response to one of two corresponding commands.

14.   A method according to claim 13 wherein during the outputting step the low-level language instructions are outputted even during compilation, and further, the low-level language instructions are outputted in a form arranged to link with a runtime routine so as to form an object program capable of being executed.

15. A method according to claim 14 wherein during the outputting step the low-level language program is selectively outputted in the form of either an object program linked with a runtime routine or in the form of compiled low-level language instructions per se.

16. A method of compiling high-level computer language statements into low-level computer language instructions, the method comprising the step of:

entering into a computer high-level language program statements comprising fundamental instruction components (6) and designations (8) of additional instruction components (7);

characterised by the further steps of:

detecting the completion of the inputting of each line of the high-level language program statements and then accessing an external memory (5) to retrieve the designated additional instruction components (9, 10) stored therein for execution in conjunction with the fundamental instruction components (6);

storing the combined fundamental instruction components (6) and additional instruction components (9, 10);

compiling the combined fundamental instruction components (6) and additional instruction components (9, 10) as each input line is completed to generate low-level language instructions; and

storing the compiled low-level language instructions.

*FIG. 1*

1/2

2

KEYBOARD

CPU

COMPILER

4

MEMORY

EXTERNAL MEMORY

5

CRT DISPLAY

3

*FIG. 2*

4

| |
|---|
| INTERACTIVE COMPILER (4a) |
| RUNTIME ROUTINE (4b) |
| STACK AREA (4c) |
| OBJECT PROGRAM (4d) |
| WORK AREA (4e) |
| BASIC SOURCE PROGRAM (4f) |

## FIG.3

```
10 DEFINT A : DEFDBL C
20 A = 0 : B = 100 : X = 1
30 A = X
40 C = A * B
50 X = X + 1
60 IF X < 10 THEN GOTO 30
```

## FIG.4

```
VARIABLE LIST
A, A % INTEGER          :        20, 30, 40
B, BI SINGLE            :        20, 40
C, C # DOUBLE           :        40
X, XI SINGLE            :        20, 30, 50, 60

LINE NUMBER LIST

    30                  :        60
```

## FIG.5

PROGRAM LANGUAGE — 6

4

ADDITIONAL INSTRUCTION — 7

## FIG.6

NAME FILE — 8

ADDITIONAL INSTRUCTION MODULE — 9

5

ADDITIONAL INSTRUCTION MODULE — 10